# EUROPÄISCHE PATENTSCHRIFT

(11) **EP 0 583 737 B1**
(45) Veröffentlichungstag und Bekanntmachung des Hinweises auf die Patenterteilung: **27.12.1996**
(21) Anmeldenummer: 93112911.8
(22) Anmeldetag: 12.08.1993
(51) Int. Cl.: A01D 34/67

(54) **Arbeitsgerät, insbesondere Trenngerät, wie Fadenschneider**
Working tool, especially cutting device, such as trimmer
Outil de travail, notamment dispositif à couper, comme coupe-fil

(30) Priorität: 20.08.1992 DE 4227487
(43) Veröffentlichungstag der Anmeldung: 23.02.1994
(73) Patentinhaber: GARDENA Kress + Kastner GmbH, D-89079 Ulm (DE)
(72) Erfinder:
(74) Vertreter: Patentanwälte Ruff, Beier, Schöndorf und Mütschele

(56) Entgegenhaltungen:
- EP-A- 0 467 006
- DE-A- 3 005 807
- DE-B- 2 166 513
- US-A- 4 209 902
- US-A- 4 259 782

## Beschreibung

Die Erfindung betrifft ein Arbeitsgerät, nach dem Oberbegriff des Patenanspruches 1. Das Gerät kann z. B. durch Schlagen, Schneiden, Scheren oder dgl. eines oder mehrerer Werkzeuge Trennschnitte ausführen, wobei die Arbeitsbewegung des jeweiligen Werkzeuges schwenkend, umlaufend bzw. rotierend und/oder im wesentlichen linear vorgesehen sein kann bzw. das Gerät ggf. ohne Eigenantrieb bzw. Lenkvorrichtung manuell über die Arbeitsfläche bewegt bzw. geleitet wird. Gesonderte Werkzeuge können unterschiedlich ausgebildet sein und/oder unterschiedliche Arbeitsbewegungen haben.

Im Falle von während der Arbeit als Ganzes bewegten mobilen Geräten, wie Fadenschneidern, mit einem oder mehreren rotierenden Schneidfäden kann dieser beim Rotieren unter den auftretenden Zentrifugalkräften im wesentlichen radial frei fliegend gestreckt gehalten werden, ohne daß das durch ihn gebildete Werkzeug für den Betrieb gegenüber einem Werkzeug-Träger lagesteif festgelegt bzw. verspannt werden müßte. In der Regel reicht hier eine an das hintere Ende des wirksamen Werkzeugabschnittes anschließende und zentrierende Führung aus, welche beim Nachstellen des Werkzeuges als Gleitführung dient, ohne daß zuvor eine Verspannung des Werkzeuges gelöst werden müßte.

Bei Werkzeugen, insbesondere solchen, die wie Pflanzenmäher für landwirtschaftliche Zwecke eingesetzt werden, kann aus verschiedenen Gründen das Bedürfnis bestehen, eine Nachstellung zu ermöglich, z.B. wegen Werkzeugabnutzung, wegen Bruch des wirksamen Werkzeugabschnittes, zur Vergrößerung der wirksamen Werkzeugerstreckung oder dergleichen.

Im Falle einer Fadenschneider-Werkzeugeinheit ist es vorteilhaft, wenn die Nachstellung durch Abgabe Zusätzlicher Fadenlänge aus einem Fadenspeicher erfolgt, der mit dem Werkzeug die Arbeitsbewegung ausführt. In jedem Falle ist es zweckmäßig, wenn die Nachstellung auch möglich ist, während das Werkzeug seine Arbeitsbewegung ausführt, so daß zur Nachstellung eine Unterbrechung der Arbeit oder ein Stillsetzen des Trenngerätes nicht erforderlich ist. Ist das Auslösen der Nachstellung während des Betriebes aus Sicherheitsgründen jedoch im wesentlichen ausschließlich nur durch Aufschlagen einer Betätigungstaste auf den Boden möglich, ggf. mit Unterstützung der Massenträgheit des größeren Gewichts-Anteiles des Gesamtgerätes, so ist die Auslösekraft sehr schwer zu dosieren, und es können durch die Auslösung Überlastungen bzw. Beschädigungen von Bauteilen eintreten. Dies ist insbesondere der Fall, wenn in dem größeren Gewichtsanteil ein Antriebsmotor, ein Gehäuse, ein Führungsholm zum manuellen Führen sowie weitere bzw. im wesentlichen alle Bauteile, wie auch die Übertragungsglieder einer Antriebsverbindung, ein Werkzeugkopf, alle Steuerglieder einer Nachstell-Steuerung, das bzw. die Betätigungsglieder für die Auslösung und dgl. einbezogen sind.

Die US-A-4 259 782 zeigt einen Fadenschneider, bei welchem der Auslöseimpuls für die Fadennachstellung über eine Aufschlagtaste axial eingeleitet wird, und erst aufgrund dieses Auslöseimpulses wird die drehende Nachstellbewegung des Fadenträgers bewirkt. Ähnlich verhält es sich auch beim Gegenstand nach der DE-A-3 005 807 und der EP-A-0 467 006.

Beim Gegenstand der US-A-4 209 902 wird demgegenüber der Auslöseimpuls über einen Bowdenzug unter Umgehung des Antriebsübertragungs-Kraftflusses und der zugehörigen Arbeitsbewegungen eingeleitet, welcher dann ebenfalls die drehende Nachstellbewegung des Fadenträgers auslöst.

Der Erfindung liegt auch die Aufgabe zugrunde, ein Arbeitsgerät zu schaffen, bei welchem Nachteile bekannter Ausbildungen oder der beschriebenen Art vermieden sind und das insbesondere bei einfacher Ausbildung eine schonende Nachstellung mindestens eines Werkzeuges im angetriebenen und/oder stillgesetzten Zustand gewährleistet.

Erfindungsgemäß sind die Merkmale nach Patentanspurch 1 vorgesehen. Es können Mittel vorgesehen sein, durch welche eine schlagfreie Auslösung der Nachstellung bzw. eine untersetzte Auslösung zu erzielen ist, so daß in das Gerät nur eine verhältnismäßig geringe Auslösekraft eingeleitet werden muß. Diese Auslösekraft wird zweckmäßig nicht unmittelbar in ein Steuerglied einer Nachstell-Steuerung, sondern in mindestens ein von diesem gesondertes Betätigungsglied eingeleitet, so daß die eingeleitete Auslösekraft durch geeignete Mittel verstärkt werden kann, um dann für die Betätigung des Eingangs-Steuergliedes der Nachstell-Steuerung ausreichend groß zu sein. Auch der Auslöseweg der Auslösebetätigung kann beliebig, nämlich etwa gleich groß wie der Steuerweg des Steuergliedes oder demgegenüber kleiner bzw. größer gewählt werden.

Bei einer vorteilhaften Ausbildung kann eine Nachstellung bzw. eine Betätigung des Steuergliedes dadurch ausgelöst werden, daß der Arbeitsbewegung eine diese verzögernde oder beschleunigende Arbeitsbewegung überlagert wird, die nach Art eines Auslöseimpulses bzw. einer Modulation der Arbeitsbewegung die Auslösung eines Nachstell-Schaltvorganges bewirkt. Ist keine elektrische bzw. elektronische oder Fluid-Übertragung, sondern im wesentlichen nur eine mechanische Übertragung des Steuerimpulses vorgesehen, so können in dessen Erzeugung von der Arbeitsbewegung abgeleitete Massenträgheitskräfte einbezogen sein, die wesentlich geringer als die beschriebenen sind bzw. für die die Gewichtsanteile der meisten oder im wesentlichen aller der genannten Bauteile nicht benötigt werden. Die durch Massenträgheit erzeugte relative Steuerbewegung kann außerdem im wesentlichen gleichgerichtet zur zugehörigen Arbeitsbewegung gewählt werden.

Zusätzlich zur oder statt der beschriebenen Ausbildung kann der Fluß der Auslösekraft für die Nachstell-Steuerung auch von der Antriebsseite des Werkzeug-Trägers her zugeführt werden anstatt von der freien Stirnseite des Werkzeugkopfes her. Wird in diesem Fall die Auslösekraft nicht über eines oder mehrere Antriebs-Übertragungsglieder, sondern über mindestens ein gesondertes Übertragungs- bzw. Leitungsglied übertragen, so kann dieses trotzdem nahe benachbart zu, an und/oder in einem bis allen Antriebs-Übertragungsgliedern vorgesehen sein.

Eine besonders vorteilhafte Weiterbildung besteht darin, daß zur Auslösung einer Nachstellung eine Bremse vorgesehen ist, die zwar als z.B. an dem Werkzeug-Träger unmittelbar angreifende Reibungsbremse ausgebildet sein könnte, bevorzugt jedoch als verschleißarme bzw. verschleißfreie Bremse ausgebildet ist, bei welcher auf nicht mechanischem Wege negative Beschleunigungsenergie freigesetzt wird. Im Falle eines Elektromotors als Antrieb kann dessen Magnetfeld auf Bremswirkung umgeschaltet werden, und im Falle eines Verbrennungsmotors kann dessen Kolben-Zylindereinheit als Kompressionsbremse verwendet werden. Im geeigneten Fall wird dabei der von der Bedienungsperson eingegebene Auslöse-Betätigungsweg in ein elektrisches Signal umgesetzt und über entsprechende Leitungen der Bremse zur Bremsaktivierung zugeführt.

Unabhängig von den beschriebenen Ausbildungen oder zusätzlich dazu ist es vorteilhaft, zur Auslösung der Nachstellung eines einzigen Werkzeuges oder gesonderter Werkzeuge gesonderte Betätigungsglieder im Abstand voneinander vorzusehen, über die z.B. wahlweise im wesentlichen der gleiche Nachstellvorgang bewirkt werden kann. Z.B. kann ein Betätigungsglied für die Nachstellung im Arbeitsbetrieb und ein Betätigungsglied für die Nachstellung im Stillstand des Werkzeuges bzw. des gesamten Trenngerätes bevorzugt oder ausschließlich geeignet sein. Des weiteren kann ein Betätigungsglied im Gegensatz zum anderen für die Anfangsjustierung eines durch Auswechseln neu eingesetzten Werkzeuges, nämlich z.B. dafür geeignet sein, ein Steuerglied der Nachstell-Steuerung unmittelbar zu betätigen, d.h. unter Umgehung von für diesen Zweck gegeneinander beweglicher Übertragungsglieder.

Aus Gründen der Unfall-Sicherheit oder aus anderen Gründen kann es unabhängig von den beschriebenen Ausbildungen oder zusätzlich dazu zweckmäßig sein, Mittel vorzusehen, durch welche ein oder mehrere Werkzeuge hinsichtlich ihrer Arbeitsbewegung oder das gesamte Trenngerät in kürzester Zeit verzögert bzw. sogar vollständig stillgesetzt werden kann. Hierzu ist zweckmäßig eine in üblicher Betriebshaltung des Trenngerätes mit dem Fuß der Bedienungsperson leicht erreichbare Taste vorgesehen, durch deren Betätigung der-Antriebsmotor abgeschaltet und/oder eine Bremse betätigt wird. Diese Bremse kann in einfacher Weise die gleiche Bremse wie diejenige zum Bewirken der Werkzeug-Nachstellung sein. Zusätzlich zu dieser Betätigungstaste ist noch im Bereich eines Handgriffes zum Führen des Trenngerätes eine üblicherweise bei Freigabe sofort selbsttätig in Ausschaltstellung rückende Handtaste vorgesehen, welche unabhängig von der Not-Verzögerung ein Abschalten des Antriebsmotors bewirkt, jedoch im Einschaltzustand durch Betätigung der Not-Verzögerung überbrückt werden kann. Dadurch besteht die Möglichkeit der Abschaltung des Trenngerätes auch dann, wenn die Handtaste, z.B. durch Verschmutzung, in der Einschaltstellung verklemmt ist.

Bei normaler Abschaltung des Trenngerätes über die Handtaste läuft das Werkzeug mit Antriebsverbindung und Antriebsmotor noch eine Zeitlang aus, bis es nach entsprechend langsamer Verzögerung völlig stillsteht. Gegenüber dieser Verzögerung ist die Verzögerung zur Auslösung eines Nachstellvorganges unterschiedlich justiert, insbesondere mehrfach verstärkt, so daß die Verzögerung bei normalem Abschalten nicht einen Nachstellvorgang auslösen kann. Sind in den Nachstellvorgang drehende Stell- bzw. Steuerbewegungen einbezogen, so sind diese zweckmäßig zwischen Steuergliedern vorgesehen, von denen mindestens eines nicht in unmittelbarem Eingriff mit dem Werkzeug bzw. dem Werkzeug-Träger steht, so daß die drehende Steuer- bzw. Stellbewegung hinsichtlich Richtung und Weg unabhängig von der Nachstellbewegung gewählt werden kann. Z.B. kann die Steuer- und Stellbewegung mit etwa einer halben Umdrehung größer als der zugehörige Teilschritt der Nachstellbewegung sein, die z.B. etwa eine Vierteldrehung beträgt und erst nach Rückstellung der Lageveränderung durch die Steuerbewegung nochmals einen solchen Teilschritt in der gleichen Richtung ausführt.

Durch die erfindungsgemäße Ausbildung ist es möglich, für eine Auslösung nur eine verhältnismäßig geringe Masse, nämlich z.B. die eines Motorrotors einschließlich der Abtriebswelle und eines oder zweier Steuerglieder, abbremsen zu müssen, wofür eine sehr geringe Bremsenergie ausreicht. Die dabei dann für den Steuervorgang wirksame Trägheitsmasse kann ebenfalls sehr gering, nämlich in der Größenordnung von wenigen 100 g gewählt werden. Für diese Trägheitsmasse sind keine gesonderten Bauteile erforderlich, sondern sie kann durch einen die Motor- bzw. Abtriebswelle begrenzt drehbar umgebenden bzw. gehäuseförmigen Werkzeugkopf, mindestens einen Werkzeugträger, wenigstens ein Steuerglied und/oder mindestens ein Werkzeug gebildet sein. Ein bis alle diese Bauteile können teilweise oder ganz aus einem nichtmetallischen Werkstoff bzw. einem Leichtbaustoff, wie Kunststoff, bestehen, der leichter als Stahl ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:
- Fig. 1: ein erfindungsgemäßes Trenngerät in Form eines Fadenschneiders in Ansicht,
- Fig. 2: den Arbeitskopf des Trenngerätes gemäß Fig. 1 in vergrößerter und teilweise geschnittener Darstellung,
- Fig. 3: einen Ausschnitt der Fig. 2 in vergrößerter sowie in den Schnitten ergänzter Darstellung,
- Fig. 4: eine Explosionsdarstellung der Antriebs- und Steuermittel für das Werkzeug,
- Fig. 5: einen Ausschnitt der Fig. 4 in Abwicklung,
- Fig. 6: einen weiteren Ausschnitt eines Bauteiles der Fig. 4 in Abwicklung,
- Fig. 7: eine Draufsicht auf den Bauteil gemäß Fig. 6,
- Fig. 8: den Bauteil gemäß Fig. 6 in Ansicht von unten und
- Fig. 9: einen weiteren Bauteil der Fig. 4 in Axialansicht.

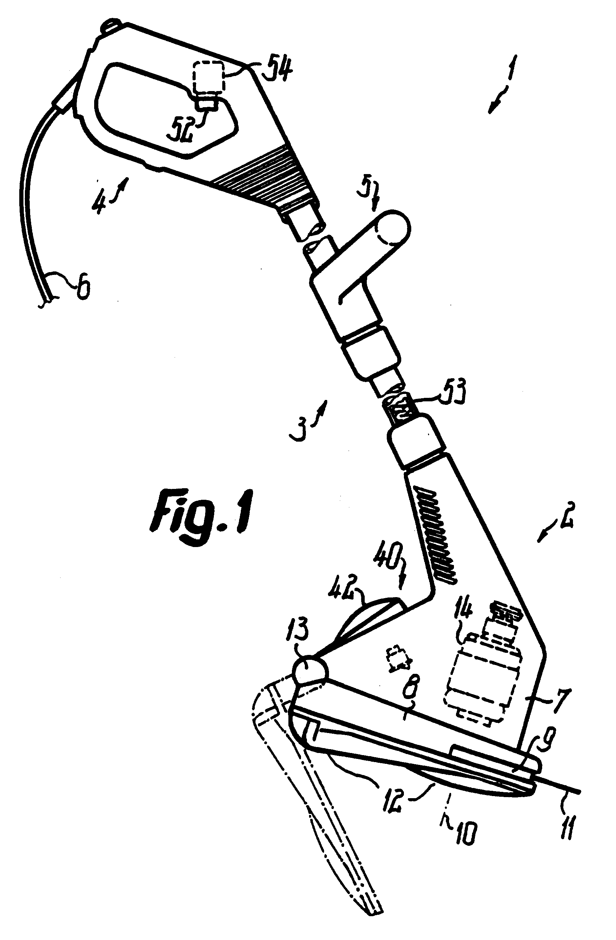

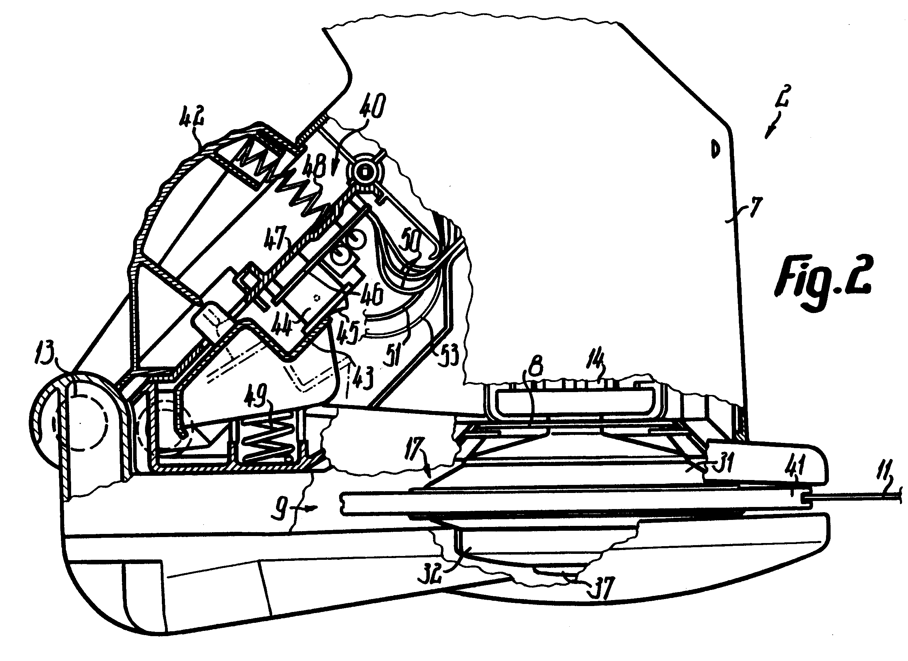

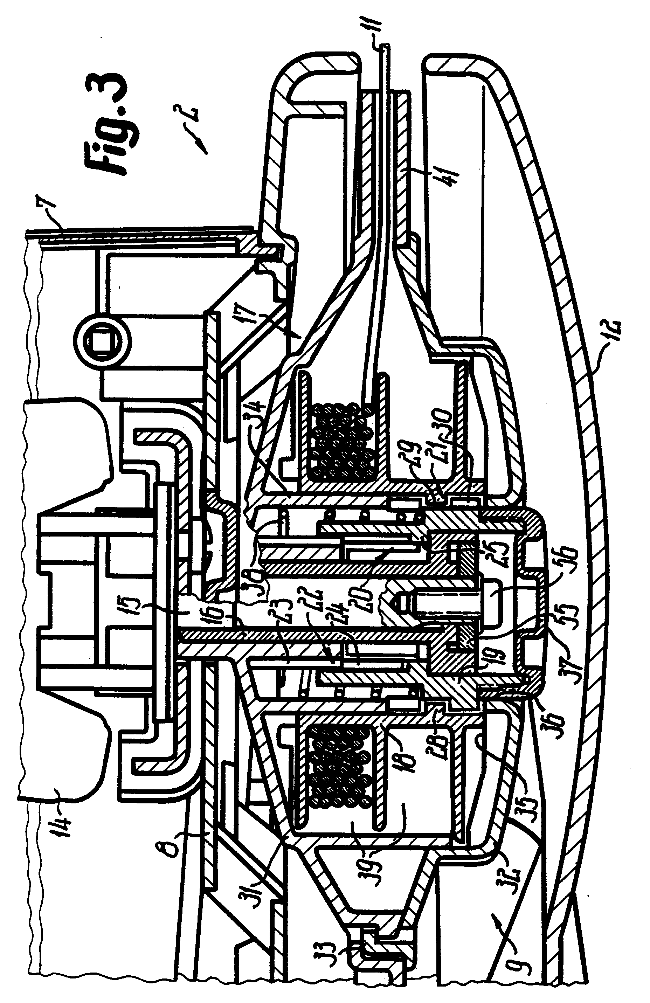

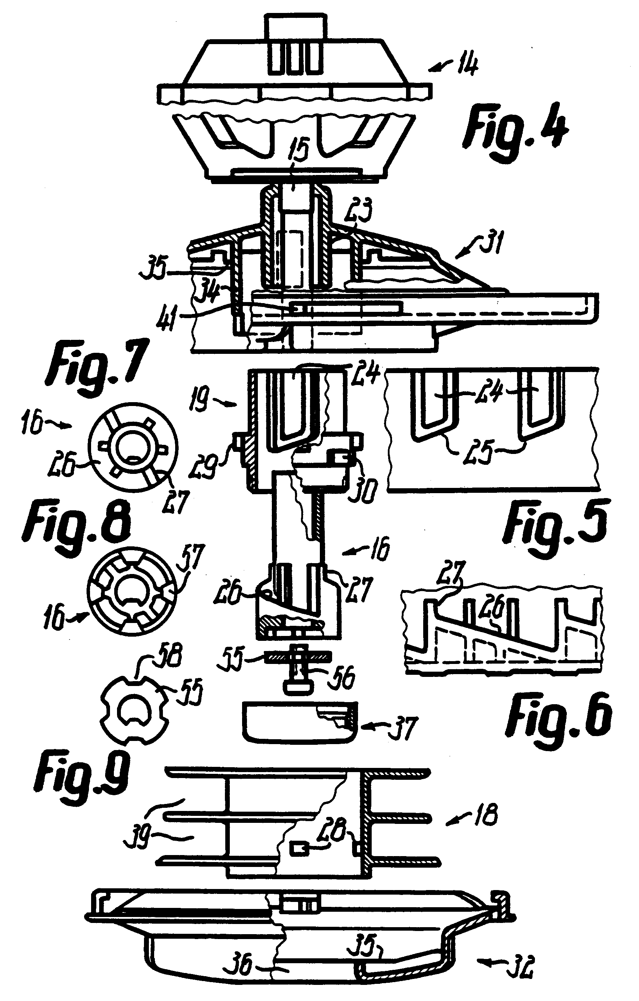

Bei dem in den Figuren 1 bis 9 dargestellten Trenngerät handelt es sich um einen sog. Fadenschneider, der ähnlich wie eine Sense mit zwei Händen frei und auch ohne weitere Abstützung getragen sowie hin und her schwingend bewegt werden kann, um längerstielige Pflanzen zu trennen. Das Trenngerät 1 weist einen unteren Gerätekopf 2 mit einem von seiner Oberseite annähernd geradlinig abstehenden Stockholm 3 auf, an dessen oberem Ende ein Führungsgriff 4 mit bügelförmigem Handschutz angeordnet ist, während im Abstand darunter ein Bügelgriff 5 vorgesehen ist, der quer zum Stockholm 3 an dessen Vorder- bzw. Oberseite liegt. Die beiden Griffe 4, 5 sind zum Halten mit jeweils einer Hand der Bedienungsperson vorgesehen. Vom hinteren Ende des Führungsgriffes 4 ist ein elektrisches Anschlußkabel 6 zur elektrischen Stromversorgung des Trenngerätes 1 weggeführt.

Der Gerätekopf 2 weist an der Oberseite ein zerstörungsfrei lösbar am unteren Ende des Stockholmes 3 befestigtes Gehäuse 7 und im Bereich von dessen Unterseite eine nach unten offen schalenförmige Konsole 8 auf, die die untere Gehäuseöffnung des Gehäuses 7 im wesentlichen vollständig deckelartig verschließt. Teilweise innerhalb der über die Unterseite des Gehäuses 7 vorstehenden Schale der Konsole 8 liegt ein Rotor bzw. Werkzeugkopf 9, der um eine zum Stockholm 3 unter einem sich nach hinten öffnenden stumpfen Winkel liegende Achse 10 drehbar ist. Über den Außenumfang des Werkzeugkopfes 9 stehen zwei etwa gleichmäßig über den Umfang verteilte Werkzeuge 11 vor, die bei Rotation durch Fliehkraft etwa rechtwinklig zur Achse 10 über die Außenseite des Gerätekopfes 2 annähernd geradlinig gestreckt hinausragen.

Der Schale der Konsole 8 kann eine entgegengesetzt offene Schale gegenüberliegen, so daß der Werkzeugkopf 9 annähernd vollständig umkleidet innerhalb eines Gehäuseraumes liegt.

Dieser Gehäuseraum ist lediglich über einen Teilumfang durch Abstand zwischen den beiden Schalen offen, damit das Werkzeug 11 durch diese Schlitzöffnung in den vorderen und seitlichen Bereichen des Gerätekopfes 2 aus diesem heraustreten und im hinteren Bereich wieder eintreten kann. Die untere Schale ist durch eine Kufe 12 gebildet, welche nach Art eines Klappdeckels um ein Gelenk 13 gemäß Fig. 1 nach unten geklappt werden kann. Das Gelenk 13 befindet sich an der Rückseite des Gerätekopfes 2 bzw. der Konsole 8 und oberhalb der Rotationsebene des Werkzeuges 11 an der Oberseite der Konsole 8. Mit der Kufe 12 kann das Trenngerät 1 auf dem Boden gleitend abgestützt werden, wobei dann die Achse 10 etwa rechtwinklig zur Gleitebene liegt.

Im wesentlichen vollständig innerhalb des Gehäuses 7 und parallel bzw. achsgleich zur Achse 10 ist ein Elektro-Motor 14 vorgesehen, dessen nach unten ragende Motorwelle ohne Zwischengetriebe die Abtriebswelle 15 für den Rotor 9 bildet, so daß dieser mit gleicher Drehzahl wie die Abtriebswelle 15 läuft. Der Motor 14 ist lagefest an der Oberseite einer in das Gehäuse 7 ragenden Halteplatte der Konsole 8 befestigt. Die Abtriebswelle 15 wird annähernd auf ihrer gesamten Länge von einer von ihrem freien Ende aufgesteckten Zwischenhülse 16 umgeben, die drehfest und axial spielfrei gesichert, jedoch zerstörungsfrei lösbar an der Abtriebswelle 15 mit einer etwa in der Achse 10 liegenden Schraube axial verspannt ist.

Der Rotor 9 weist ein annähernd diskusscheibenförmiges Gehäuse 17 auf, das mit einer innen und/oder außen liegenden, hülsenförmigen Lagernabe radial und/oder axial im wesentlichen spielfrei gesichert, jedoch schwenk- bzw. drehbar auf dem Außenumfang der Zwischenhülse 16 angeordnet ist. Vollständig verkapselt innerhalb des Gehäuses 17 ist ein Werkzeug-Träger 18 in Form eines Speichers bzw. einer Spule für die aufgewickelte Aufnahme eines Stranges bzw. Fadens angeordnet, dessen von dem Außenumfang der Wicklungen abstehendes Ende das etwa radial nach außen nachstellbare Werkzeug 11 bildet. Der Träger 18 ist zu diesem Zweck gegenüber dem Gehäuse 17 bzw. der Zwischenhülse 16 und der Abtriebswelle 15 in gleichsinnigen Teilschritten drehbar, die höchstens etwa eine volle, eine halbe oder insbesondere eine Viertel-Umdrehung betragen und jeweils durch Anschlag begrenzt sind.

Die Steuerung dieser Teilschritte wird durch eine etwa in der Achse 10 liegende Steuerhülse 19 bewirkt, welche mit dem größten Teil ihrer Länge innerhalb des Trägers 18 liegt und die Abtriebswelle 15 sowie die Zwischenhülse 16 am Außenumfang umgibt. Die Steuerhülse 19 ist gegenüber den genannten Bauteilen mit einem an ihrem Innenumfang liegenden Stelltrieb 20 axial verstellbar und gehört mit ihrem Außenumfang zu einem Schaltwerk 21, welches in Abhängigkeit von der axialen Verstellung die Teilschritte des Trägers 18 bewirkt. Gegenüber dem Gehäuse 17 ist die Steuerhülse 19 in jeder Axialstellung durch eine Drehverbindung 22 gegen Verdrehen gesichert, die am Außenumfang der Lagernabe des Gehäuses 17 axial stegförmige Nocken 23 aufweist, welche in entsprechende axiale Nuten 24 am Innenumfang der Steuerhülse 19 eingreifen.

Die Nuten 24 reichen vom inneren Ende der Steuerhülse 19 nur über einen Teil von deren Länge. An das geschlossene Ende der jeweiligen Nut 24 schließt ein über den Innenumfang der Steuerhülse 19 vorstehender Nocken 25 an, der mit einer von dem Antrieb 14 abgekehrten Nockenfläche axial auf einer wendelförmigen Steigung 26 der Zwischenhülse 16 abgestützt ist. Die jeweilige Nut 24 ist von einem U-förmigen Stegvorsprung am Innenumfang der Steuerhülse 19 begrenzt. Dessen U-Quersteg bildet mit seiner von der Nut abgekehrten Flankenfläche die Nockenfläche des Nockens 25, welche im wesentlichen gleich wie die Steigung 26 geneigt ist. Der Stegvorsprung dient zur ausschließlichen Führung der Steuerhülse 19 am Außenumfang der Lagernabe des Gehäuses 17, so daß sich hier eine verhältnismäßig geringe Gleitreibung ergibt. Die zur Antriebsseite weisende und näher bei dem von dieser entfernten Ende der Zwischenhülse 16 liegende Steigung 26 ist eine nur einseitig begrenzte und teilringförmige Stirnwendel an der Schulter eines erweiterten Kopfes der Zwischenhülse 16, welcher im wesentlichen im axialen Abstand von der Lagernabe des Gehäuses 17 liegt, an das vom Antrieb 14 entfernte Ende der Zwischenhülse 16 anschließt, als Axialanschlag für die Steuerhülse 19 dient und über den die übrige Zwischenhülse 16 mit einem durchgehend zylindrischen Hülsenabschnitt vorsteht, auf dessen Außenumfang die Lagernabe geführt ist.

Jede über einen Bogenwinkel von etwa 180° sich erstreckende Steigung 26 endet in einem Anschlag 27, durch den das Ende der Drehbewegung der Einheit aus Gehäuse 17 und Steuerhülse 19 gegenüber der Abtriebswelle 15 sowie der Axialbewegung der Steuerhülse 19 gegenüber dem Gehäuse 17 bestimmt ist, so daß hierfür die Steigung 26 nicht anzuschlagen braucht. Etwa von der jeweiligen Steigung 26 ausgehend, kann mit Abstand zwischen deren Enden mindestens ein stegförmiger Gleitvorsprung am Außenumfang des Hülsenabschnittes der Zwischenhülse 16 vorgesehen sein. Dieser Gleitvorsprung steht radial weniger weit als die Steigung 26 vor und bildet mit seiner Stegkante eine Gleitfläche zum Eingriff in die Stegkante des jeweiligen U-förmigen Stegvorsprunges der Steuerhülse 19, so daß auch zwischen den beiden Hülsen 16, 19 eine sehr geringe Reibung erzielt wird.

Der Träger 18 weist einen radial inneren, nabenförmigen Hülsenteil auf, über dessen Innenumfang ein Kranz von z.B. vier gleichmäßig verteilten Nocken 28 vorsteht. Diese Nocken 28 liegen weiter entfernt vom antriebsseitigen Ende des Trägers 18 und mit geringem Abstand vom anderen Ende. Den Nocken 28 sind in zwei axial unmittelbar benachbarten Nockenkränzen bzw. Nockenreihen 29, 30 liegende Gegennocken zugeordnet, die am Außenumfang der Steuerhülse 19 vorgesehen sind und mit geringerem Abstand vom antriebsfernen als vom anderen Ende der Steuerhülse 19 etwa im selben Axialabschnitt wie die Nocken 25 liegen. Die Gegennocken der Nockenreihen 29, 30 sind in Umfangsrichtung um etwa eine halbe Teilung ihrer Nockenverteilung gegeneinander versetzt, d.h. im Falle von vier Gegennocken je Nockenreihe um etwa 45°. Zwischen benachbarten Gegennocken beider Nockenreihen 29, 30 ist jedoch in Umfangsrichtung genügend Platz für den Durchtritt eines Nockens 28, so daß dieser durch axiales Hin- und Herbewegen der Steuerhülse 19 wahlweise zwischen Gegennocken der Nockenreihe 29 und solche der Nockenreihe 30 gebracht werden kann. Im Normalbetrieb bzw. im Ruhezustand der Steuerhülse 19 liegen die Nocken 28 im Bereich der zur Antriebsseite näheren Nockenreihe 29, mit deren Gegennocken sie in formschlüssigem Dreh-Antriebseingriff stehen.

Das Gehäuse 17 besteht im wesentlichen aus Zwei glocken- bzw. schalenförmigen und mit ihren Schalenöffnungen gegeneinander gerichteten Gehäuseteilen, nämlich einem die Lagernabe aufweisenden Grundkörper 31 und einem Deckel 32, die beide jeweils annähernd über die gesamte Weite des Gehäuseraumes reichen. Der Deckel 32 bildet die vom Antrieb 14 weiter entfernte Seite des Gehäuses 17 und ist am Grundkörper 31 mit einer Bajonettverbindung 33 zerstörungsfrei leicht lösbar befestigt, welche unmittelbar am Außenumfang des Gehäuseraumes liegt. Durch Drehen des Deckels 32 gegenüber dem Grundkörper 31 um die Gehäuse-Achse 10 kann der Deckel 32 von allen übrigen Bauteilen gelöst und bei weggeklappter Kufe 12 axial so abgezogen werden, daß der Träger 18 zur axialen Herausnahme aus dem Gehäuse 17 frei liegt.

Der Träger 18 ist in dem Gehäuse 17 radial und axial im wesentlichen spielfrei gesichert, gegenüber dem Gehäuse 17 jedoch in den genannten, durch die Nockenreihen 29, 30 bestimmten Teilschritten, drehbar. Zu diesem Zweck steht von derselben, zum Antrieb 14 näheren Stirnwand des Gehäuses 17, von welcher auch dessen Lagernabe axial absteht, ein hülsenförmiges Radiallager 34 frei ausragend ab, welches die bis zu ihrem freien Ende durchgehend offene Lagernabe am Außenumfang mit Radialabstand umgibt und weiter vorsteht als die Lagernabe. Auf dem Außenumfang dieses Radiallagers 34 ist der Träger 18 mit seinem hülsenförmigen Nabenteil in den genannten Teilschritten drehbar und axial abziehbar gelagert. Im Betriebszustand ist der Träger 18 zwischen Axiallagern 35 im wesentlichen spielfrei gelagert, die durch Kanten- bzw. Gleitflächen von Rippenstegen an den Innenseiten der Stirnwände des Grundkörpers 31 und des Deckels 32 gebildet sind. Diese Gleitflächen liegen an den voneinander abgekehrten äußersten Stirnflächen des Trägers 18, und zwar nur in einer schmalen Ringzone an, welche im wesentlichen an den Innenumfang des Nabenteiles des Trägers 18 anschließt, so daß sich nur eine geringe Reibung ergibt.

Die Steuerhülse 19 ist unter Abheben der Nocken 25 von den Steigungen 26 und ohne Drehung gegenüber der Zwischenhülse 16 bzw. der Abtriebswelle 15 durch Betätigung unmittelbar von der Außenseite des geschlossenen Gehäuses 17 her axial in mindestens zwei Funktionsstellungen verschiebbar. Hierzu weist der Deckel 32 in seiner Stirnwand einen Durchlaß 36 für die Steuerhülse 19 bzw. ein kappenförmiges Betätigungsglied 37 auf, das auf einen reduzierten Außenumfang des zugehörigen Endes der Steuerhülse 19 zerstörungsfrei leicht lösbar aufgeschraubt, mit seinem Außenumfang gleitend am Innenumfang des Durchlasses 36 geführt und als geringfügig axial über den Deckel 32 vorstehende Drucktaste ausgebildet ist.

Nach Lösen des Betätigungsgliedes 37 ist der vollständig versenkt in der Steuerhülse 19 liegende Kopf der Zwischenhülse 16 bzw. deren Befestigungsglied frei zugänglich, so daß dann die Zwischenhülse 16 von der Abtriebswelle 15 zerstörungsfrei gelöst und abgezogen werden kann, wie auch die Steuerhülse 19. Durch die genannte Druckbetätigung des Betätigungsgliedes 37 wird die Steuerhülse 19 entgegen der Kraft einer Rückstellfeder 38 so nach innen geschoben, daß die Nockenreihe 29 außer Eingriff und die Nockenreihe 30 in Eingriff mit den Nocken 28 gelangt. Die Gegennocken der Nockenreihe 29 können dabei in Ausschnitte eintreten, welche das freie Ende des Radiallagers 34 durchsetzen. Die Rückstellfeder 38 ist zwischen der Lagernabe und dem Radiallager 34 so angeordnet, daß sie den Außenumfang der Steuerhülse 19 auf einem Teil von deren Länge umgibt und mit dem zugehörigen Ende an einer äußeren Ringschulter der Steuerhülse 19 abgestüzt ist, welche mit den Flanken der Gegennocken der Nockenreihe 29 zusammenfällt. Die Kraft der Rückstellfeder 38 bzw. die Steigungen 26 sind so gewählt, daß die Steuerhülse 19 bei Rückstellung durch Gleiten der Nocken 25 an den Steigungen 26 zurückgedreht wird, bis die Nocken 25 anschlagbegrenzt an den Anfängen der Steigungen 26 liegen.

Das freie Ende der Zwischenhülse 16 bzw. der Abtriebswelle 15 liegt im wesentlichen vollständig innerhalb des Trägers 18, über den das äußere Ende der Steuerhülse 19 nur mit einem geringeren Teil von deren Länge vorsteht. Der Träger 18 bildet zwei axial unmittelbar benachbarte, ringnutförmig am Außenumfang offene und etwa gleich große Speicherkammern 39 zur aufgewickelten Aufnahme jeweils eines gesonderten Fadens. Diese Speicherkammern 39 sind durch ringscheibenförmig über den Außenumfang der Trägernabe vorstehende Stirnwände gebildet. Von jeder Speicherkammer 39 verläuft der zugehörige Faden zu einer gesonderten Werkzeugführung 41, die einen Führungskanal für den Durchtritt des Fadens bildet. Jeder Führungskanal ist ausschließlich vom Grundkörper 31 begrenzt, jedoch nach Abnahme des Deckels 32 von seinem inneren Ende her frei zugänglich, so daß der Faden einfach in den Führungskanal eingeführt werden kann.

Die Führungen 41 sind zweckmäßig etwa gleichmäßig um die Achse 10 verteilt, schließen unmittelbar radial nach außen an den Gehäuseraum des Gehäuses 17 an, liegen radial vollständig innerhalb des zugehörigen Gehäuseraumes des Gerätekopfes 2 und geben den jeweiligen Faden ab ihrem äußeren Ende zur Bildung des Werkzeuges 11 frei. Die Führungskanäle liegen etwa in der Mittelebene zwischen den Speicherkammern 39 bzw. in einer zur Achse 10 rechtwinkligen Ebene, so daß der Faden von jeder Speicherkammer 39 wahlweise durch jede der Führungen 41 geführt werden kann.

Die beschriebene Betätigung des Schaltwerkes 21 mit Hilfe des Betätigungsgliedes 37 ist insbesondere bei Stillstand des Werkzeugkopfes 9 geeignet, obgleich sie auch während dessen Rotation möglich ist, z.B. durch Aufschlagen des Gerätekopfes 2 mit dem Betätigungsglied 37 auf den Boden bei weggeklappter Kufe 12 oder bei geschlossener Kufe 12, falls zwischen deren Innenseite und dem Betätigungsglied 37 ein Druck-Übertragungsglied vorgesehen ist. Zur Betätigung des Schaltwerkes 21 während der Rotation des Werkzeugkopfes 9 ist bevorzugt eine Auslösung 40 vorgesehen, deren Betätigungsglied 42 bei der beschriebenen, betriebsgemäßen und mindestens einhändigen Führung des Trenngerätes 1 an wenigstens einem der Griffe erfindungsgemäß durch die Bedienungsperson mit einer Hand bzw. einem Fuß zur Betätigung auch dann erreichbar ist, wenn die Kufe 12 geschlossen bzw. die Unterseite des Gerätekopfes 2 auf den Boden aufgesetzt oder anderswie unzuganglich ist.

Das Betätigungsglied 42 liegt unterhalb des Stockholmes 3 an der von der Vorder- bzw. Arbeitsseite abgekehrten und schräg nach vorne geneigten Rückseite des Gerätekopfes 2 bzw. des Gehäuses 7 unmittelbar oberhalb des Gelenkes 13 und der Arbeitsebene des Werkzeuges 11. Über das vordere Ende dieser Rückseite steht mit geringem Abstand vom Betätigungsglied 42 ein den Stockholm 3 tragender Schaftabschnitt des Gehäuses 7 vor, so daß ein nach oben über das Betätigungsglied 42 vorstehender Anschlagschild für den Fuß der Bedienungsperson gebildet ist, welcher das Auffinden der richtigen Stellung des Fusses zur Betätigung des Betätigungsgliedes 42 erleichtert. Das Betätigungsglied 42 ist als in Ausgangslage über das Gehäuse 7 vorstehende Pedal- bzw. Drucktaste ausgebildet und um die Achse eines Gelenkes schwenkbar, welche zweckmäßig etwa horizontal bzw. parallel zur Drehebene des Werkzeuges 11, quer zur Achse 10, tiefer als das Betätigungsglied 42, parallel zum Gelenk 13 und/oder mit dessen Gelenkachse zusammenfallend vorgesehen ist, so daß das Betätigungsglied 42 von seinem Gelenk schräg nach oben vorne frei ausragt. Durch Fußbetätigung kann das Betätigungsglied 42 durch eine Öffnung vollständig in das Gehäuse 7 bzw. in seine Auslösestellung versenkt werden, so daß dann der Fuß auf der Rückseite des Gehäuses 7 abgestützt ist und die zugehörigen Bauteile der Auslösung 40 nicht durch weiteren Druck beschädigt werden können.

Das Betätigungsglied 42 wirkt durch Nockendruck auf ein innerhalb des Gehäuses 7 an der Konsole 8 bewegbar gelagertes Zwischenglied 43, das wie das Betätigungsglied 42 durch einen einarmigen Schwenkhebel gebildet und um eine zu dessen Gelenkachse etwa parallele bzw. gegenüber dieser Gelenkachse vorversetzte Achse schwenkbar sein kann. Das Zwischenglied 43 wirkt auf einen im Bereich der Innenseite des Betätigungsgliedes 42 liegenden Schalter 44, dessen Betätigungsglied in Form einer Schaltwippe 45 auf seiner vom Betätigungsglied 42 abgekehrten Seite liegt. Der Schalter 44 ist an einer zwischen dem Betätigungsglied 42 und der Schaltwippe 45 liegenden Leiterplatte 46 frei abstehend befestigt, welche die elektrischen Schaltelemente für den Motor 14 trägt und auf der vom Schalter 44 abgekehrten Seite an einer Tragplatte 47 befestigt ist. Diese, im wesentlichen zwischen dem Zwischenglied 43 und dem Betätigungsglied 42 liegende Tragplatte 47 ist durch Schnappverbindungen am Gehäuse 7 befestigt und dient zur Abstützung einer Rückstellfeder 48 für das Betätigungsglied 42. Unabhängig davon steht das Zwischenglied 43 unter der Kraft einer Rückstellfeder 49, welche über die Nockenverbindung auch auf das Betätigungsglied 42 wirkt.

In der Betriebsstellung steht der Schalter 44 in Ein-Stellung dadurch, daß das Zwischenglied 43 mit einem Schaltschenkel den zugehörigen Wippenschenkel der Schaltwippe 45 in dieser Stellung unter der Kraft der Rückstellfeder 49 hält. Die Schaltwippe 45 ist gegenüber dem Schaltergehäuse um eine zu den Gelenkachsen des Betätigungsgliedes 42 bzw. des Zwischengliedes 42 etwa parallele Achse schwenkbar und in dieser Stellung zur anderen Schaltstellung, nämlich zur Aus-Stellung, durch eine innerhalb des Schaltergehäuses liegende Feder federbelastet. Wird das Betätigungsglied 42 niedergedrückt, so nimmt es über die Nockenverbindung das Zwischenglied 43 im gleichen Bewegungssinne mit, so daß der Wippenschenkel freigegeben wird und die Schaltwippe 45 bzw. der Schalter 44 sofort in die zugehörige Stellung springt.

Nach Freigabe des Betätigungsgliedes 42 kann dieses durch Abheben der Nockenverbindung unabhängig vom Zwischenglied 43 in seine Ausgangsstellung zurückkehren, während das Zwischenglied 43 ggf. mit einer Verzögerung unter der Kraft der Rückstellfeder 49 in seine Ausgangsstellung zurückkehrt und dabei den Schalter 44 durch formschlüssige Mitnahme in seine Betriebsstellung überführt.

Durch den Schalter 44 werden ggf. über gesonderte Kontaktpaare Bremsleitungen 50 und Betriebsleitungen 51 geschaltet, über welche der Motor 14 gesteuert wird. Die Bremsleitungen 50 sind als Kurzschlußleitungen zum Kurzschließen des Motors 14 so vorgesehen, daß dieser nach Art einer Magnetfeldbremse auf stark verzögernden Generatorbetrieb umgeschaltet wird. Die Betriebsleitungen 51 dienen zur Stromversorgung des Motors 14 im Arbeitsbetrieb. Eine dieser Betriebsleitungen 51 wird durch das zugehörige Kontaktpaar des Schalters 44 geschaltet, das in Reihe mit einem Kontaktpaar eines weiteren Schalters 54 angeordnet ist, dessen Betätigungsglied 52 bei betriebsgerechtem Halten des Griffes 4 durch die Hand der Bedienungsperson in Ein-Stellung gehalten werden kann. Dieses Betätigungsglied 52 bzw. der zugehörige Schalter stellen bei Freigabe ebenfalls selbsttätig in die Aus-Stellung zurück. Das Anschlußkabel 6 ist mit einer Leitung über den genannten Schalter 54 und innerhalb des Stockholmes 3 über eine Versorgungsleitung 53 in den Gerätekopf 2 geführt, wo in der zugehörigen Einzelleitung das entsprechende Kontaktpaar des Schalters 44 in Reihe mit dem Schalter 54 angeordnet ist.

Ist einer der beiden Schalter 44, 54 in Aus-Stellung, so kann der Antrieb 14 nicht in Betrieb genommen werden, d.h. für den Betrieb muß das Betätigungsglied 52 betätigt und das Betätigungsglied 42 unbetätigt sein. Wird bei Ein-Stellung des Schalters 54, also bei angetrieben rotierendem Werkzeugkopf 9 das Betätigungsglied 42 betätigt, so springt der Schalter 44 in diejenige seiner Schaltstellungen, in welcher die Stromzufuhr über die Betriebsleitung 51 unterbrochen und die genannte Bremswirkung in Gang gesetzt ist. Die Bremskraft bzw. -energie ist gegenüber derjenigen, die zur Betätigung erforderlich ist, wesentlich, z.B. mindestens in der Größenordnung des 10-fachen, verstärkt und kann bis mindestens zum 100-fachen jedes ganzzahlige Vielfache davon betragen.

Durch die Bremswirkung wird der nicht näher dargestellte Rotor des Motors 14 mit Wicklung und formschlüssig verbundener Abtriebswelle 15 schlagartig verzögert bzw. in höchstens einer Sekunde annähernd bis zum Stillstand abgebremst, was auch für die Zwischenhülse 16 gilt. Aufgrund ihrer Massenträgheiten wirkt diese Verzögerung jedoch zunächst nur vernachlässigbar auf die übrigen Bauteile des Rotors 9, nämlich auf das Gehäuse 17, den Träger 18 und die Steuerhülse 19. So wird die Steuerhülse 19 zuerst gemeinsam mit den genannten Bauteilen gegenüber der Zwischenhülse 16 verdreht und der Träger auch durch die Flieh-Zugkraft des Fadens gegen Voreilen gegen die Nocken gesichert. Die Nocken 25 gleiten entlang den Steigungen 26, so daß die Steuerhülse 19 gleich wie bei Betätigung durch das Betätigungsglied 37 zum Antrieb 14 hin axial bis zum Anschlag an den Anschlägen 27 verschoben wird. Aufgrund des entsprechend angepaßten Verschiebeweges rücken die Gegennocken der Nockenreihe 29 außer Eingriff mit den Nocken 28 und in Eingriff mit den Aufnahmeausschnitten des Radiallagers 34, so daß die drehschlüssige Verbindung zwischen den Nocken 28 und diesen Gegennocken aufgehoben wird. Gleichzeitig gelangen die Gegennocken der Nockenreihe 30 in den Dreh-Bewegungsweg der Nocken 28, haben jedoch zunächst noch gegenüber den Nocken 28 zumindest in Arbeits-Drehrichtung einen Umfangsabstand von etwa 45°. Sobald die Nocken 28 von der Nockenreihe 29 freigekommen sind und die Steuerhülse 19 daher ihre Drehbewegung gegenüber der Zwischenhülse 16 beendet hat, kann der Träger 18 allein unter der Wirkung seiner Massenträgheit und/oder der am Werkzeug-Fadenende angreifenden Zentrifugalkraft um den genannten Umfangswinkel gegenüber dem Gehäuse 17 und der Steuerhülse 19 im Sinne eines Abwickelns des Fadens gedreht werden. Am Ende dieses Schaltschrittes schlagen die Nocken 28 an der Nockenreihe 30 an. Wird nun die Auslösung 40 bzw. das Betätigungsglied 42 wieder freigegeben, so beschleunigt die Zwischenhülse 16 positiv bzw. kehrt die Steuerhülse 19 unter der Kraft der Rückstellfeder 38 in ihre Ausgangslage zurück, wodurch nun die Nockenreihe 30 wieder außer Eingriff und die Nockenreihe 29 in den Eingriffsbereich der Nocken 28 gelangt, so daß diese nochmals mit dem Träger 18 um einen entsprechenden Umfangswinkel weiter gedreht werden können.

Im Gegensatz zu einer durch Federkraft selbstrückstellenden Fliehkraftverstellung eines Werkzeuges in Abhängigkeit von Drehzahlen, ist bei der erfindungsgemäßen Ausbildung eine jeweils zumindest teilweise bleibende Nachstellung des Werkzeuges 11 vorgesehen, und diese Nachstellung bleibt dann unabhängig von der Drehzahl des Werkzeugkopfes 9 aufrechterhalten. Ein durch Betätigung der Auslösung 40 bewirkter Auslöseimpuls für die Nachstellung kann sehr kurzzeitig sein, so daß hierfür eine Betätigung des Betätigungsgliedes 42 von weniger als einer, einer halben oder einer viertel Sekunde genügt. Das Betätigungsglied 42 kann aber auch zur sehr schnellen Stillsetzung des Werkzeugkopfes 9, z.B. in Notfällen, verwendet werden.

Die beschriebenen mechanischen, im Bereich des Werkzeugkopfes 9 vorgesehenen Steuermittel können sehr einfach montiert bzw. zerstörungsfrei demontiert werden und behindern das Auswechseln des Trägers 18 in keiner Weise. Nach Abnehmen des Deckels 32 kann der Träger 18 über den zugehörigen Abschnitt der Steuerhülse 19 und über das Betätigungsglied 37 abgezogen und umgekehrt ein neuer Träger aufgesetzt werden. Das Betätigungsglied 37 weist an seiner Stirnseite Schlüsselöffnungen für ein Werkzeug auf, mit welchem es von der Steuerhülse 19 abgeschraubt werden kann, auf die es mit einem an seinem Kappenmantel vorgesehenen Innengewinde bis zum stirnseitigen Anschlag an einer der Nockenreihe 30 zugehörigen Schulterfläche aufgeschraubt ist.

Die Außenweite des Betätigungsgliedes 37 ist gleich derjenigen, über welche die Nockenreihen 29, 30 der Steuerhülse 19 vorstehen. Danach kann die in ein Innengewinde der Abtriebswelle 15 eingreifende Schraube 56 gelöst werden, mit welcher ein versenkt im Kopf der Zwischenhülse 16 liegendes, ringscheibenförmiges Sicherungsglied 55 gegen eine innere Stirnfläche der Zwischenhülse 16 axial gespannt ist. Der Kopf weist radial nach innen vorstehende Nocken 57 zum Eingriff in Öffnungen 58 am Außenumfang des Sicherungsgliedes 55 auf, so daß diese beiden Bauteile gegeneinander formschlüssig verdrehgesichert sind. Außerdem greifen der Kopf und auch das Sicherungsglied 55 jeweils mit einem Nocken in eine Axialnut am Außenumfang der Abtriebswelle 15 ein, so daß die formschlüssige Drehverbindung noch weiter verbessert ist. Nach Entfernen der Schraube 56 können das Sicherungsglied 55, die Zwischenhülse 16 und die Steuerhülse 19 sowie die Rückstellfeder 38 herausgezogen und spätestens nach Abziehen der Steuerhülse 19 ggf. auch der Grundkörper 31 von der Abtriebswelle 15 abgezogen werden.

Alle Bauteile, Räume und Anordnungen können jeweils nur einzeln oder in einer Mehrzahl von zwei oder mehr vorgesehen sein, beispielsweise um mehrere zu einem Trenngerät zusammengefaßte Geräte- bzw. Werkzeugköpfe unabhängig voneinander und/oder gemeinsam in der beschriebenen Weise betreiben zu können. Ferner kann die Umwandlung der Drehbewegung einer Abtriebswelle 15 in die axiale Steuerbewegung für die Betätigung eines Schaltwerkes 21 auch dadurch erfolgen, daß eine Steuerhülse 19 axial feststehend auf der Abtriebswelle 15 angeordnet ist, während ein Träger 18 mit dem Drehkopf bzw. Gehäuse 17 axial verschiebbar ist. In diesem Fall wäre der Steigungstrieb 25, 26 zwischen der Abtriebswelle 15 und dem Gehäuse 17 vorzusehen.

## Patentansprüche

1. Arbeitsgerät, insbesondere Fadenschneider für landwirtschaftliche Zwecke oder dgl., mit mindestens einer Verbindung aus Antriebs-Übertragungsgliedern (15, 16, 19, 18), die entlang wenigstens eines Übertragungs-Kraftflusses jeweils in einer dem Kraftfluß zugehörigen Arbeitsbewegung bewegbar sind und von denen mindestens eines als Werkzeug-Träger (18) ausgebildet sowie an ihm wenigstens ein Werkzeug (11) durch Auslösung eines Auslöseimpulses nachstellbar anzuordnen ist, dadurch gekennzeichnet, daß als Auslöseimpuls zur Auslösung der Nachstellung mindestens eines Werkzeuges (11) eine Modulation der Arbeitsbewegung wenigstens eines Antriebs-Übertragungsgliedes (15, 16) vorgesehen ist.

2. Arbeitsgerät, nach dem Oberbegriff des Anspruches 1, dadurch gekennzeichnet, daß eine Übertragung eines Auslöseimpulses zur Auslösung einer Nachstellung wenigstens eines Werkzeuges (11) oder dgl. annähernd entlang mindestens eines Teiles des Übertragungs-Kraftflusses im wesentlichen gleichgerichtet zu diesem erfolgt, daß insbesondere der Auslöseimpuls vor wenigstens einer den Nachstellweg bestimmenden Nachstell-Steuerung (21) eingeleitet wird und daß vorzugsweise der Auslöseimpuls durch eine negative und/oder positive Beschleunigung einer zugehörigen Arbeitsbewegung erfolgt.

3. Arbeitsgerät nach Anspruch 1 oder 2, dadurch gekennzeichnet, daß eine Auslösung einer Nachstellung oder dgl. über mindestens eine Bremse erfolgt, daß insbesondere eine Bremse unmittelbar an wenigstens einem Übertragungsglied (15) angreift und daß vorzugsweise eine Bremse mit berührungsfreiem Bremswiderstand ausgebildet bzw. durch einen auf Bremsbetrieb umschaltbaren Antriebs-Motor (14) gebildet ist und/oder daß eine Auslösung auf wenigstens eine mechanische Nachstell-Steuerung (21) wirkt, daß insbesondere eine Nachstell-Steuerung ein Schritt-Schaltwerk (21) aufweist und daß vorzugsweise eine Nachstell-Steuerung ein über die Auslösung (40) zu betätigendes mechanisches bzw. zur Steuerung quer zur zugehörigen Arbeitsbewegung bewegbares Steuerglied (19) aufweist.

4. Arbeitsgerät nach einem der vorhergehenden Ansprüche, dadurch gekennzeichnet, daß die Auslösung im wesentlichen mechanisch übertragen wird, daß insbesondere mindestens ein mechanischer Auslösetrieb (20) vorgesehen ist und daß vorzugsweise ein Steuerglied (19) einer Nachstell-Steuerung (21) gleichzeitig ein Auslöse-Ausgangsglied eines Auslösetriebes (20) und/oder über eine Steigungs-Steuerung (25, 26) betätigt ist.

5. Arbeitsgerät nach einem der vorhergehenden Ansprüche, dadurch gekennzeichnet, daß die Arbeitsbewegung mindestens eines Übertragungsgliedes im wesentlichen eine Drehbewegung und/oder die Nachstellbewegung mindestens eines Werkzeuges (11) mindestens teilweise eine Linearbewegung ist, daß insbesondere die Auslösung der Nachstellung wenigstens eines Werkzeuges (11) eine zur Achse (10) der zugehörigen Arbeitsbewegung annähernd parallele Steuerbewegung einschließt und daß vorzugsweise ein Auslösetrieb (20) zwischen einer axialen Bewegung und einer Drehbewegung umsetzend ineinandergreifende Stellglieder (25, 26) aufweist.

6. Arbeitsgerät nach einem der vorhergehenden Ansprüche, dadurch gekennzeichnet, daß wenigstens eines der Übertragungsglieder (19, 18) zur Auslösung als gegenüber mindestens einem weiteren Übertragungsglied (15, 16) im wesentlichen im Sinne seiner Arbeitsbewegung unter Massen-Trägheitskräften begrenzt verstellbarer Massen-Trägheitskörper ausgebildet ist, daß insbesondere ein Trägheitskörper wenigstens einen von Einzelkörpern einschließt, die durch mindestens einen Werkzeug-Träger (18), wenigstens ein Werkzeug (11), mindestens ein Werkzeug-Gehäuse (17) sowie wenigstens ein Steuerglied (19) einer Nachstell-Steuerung (21) bzw. eines Auslösetriebes (20) gebildet sind und daß vorzugsweise ein mindestens ein Werkzeug (11) tragender Werkzeugkopf (9) gegenüber einer Abtriebswelle (15) in einer Steuerbewegung anschlagbegrenzt drehbar ist.

7. Arbeitsgerät nach einem der vorhergehenden Ansprüche, dadurch gekennzeichnet, daß mindestens ein Werkzeug (11) durch ein Ende eines an wenigstens einem Speicher (39) nachstellbar aufgewickelten, flexiblen Stranges gebildet ist, daß insbesondere ein Speicher (39) innerhalb eines und gegenüber einem Gehäuse (17) schrittweise um Abwickel-Nachstellwege drehbar ist und daß vorzugsweise in der Antriebsverbindung zwischen einem Werkzeug-Träger (18) und einer Abtriebswelle (15) ein Auslösetrieb (20) und/oder eine Nachstell-Steuerung (21) angeordnet ist.

8. Arbeitsgerät nach einem der vorhergehenden Ansprüche, dadurch gekennzeichnet, daß mindestens ein Auslösetrieb (20) der Auslösung (40) im wesentlichen vollständig verkapselt und/oder im wesentlichen achsgleich zu einer Achse (10) der Antriebsverbindung angeordnet ist, daß insbesondere ein Auslösetrieb (20) mindestens eine eine Welle (15) axial verschiebbar und/oder im wesentlichen in drehfester Verbindung umgebende Steuerhülse (19) aufweist und daß vorzugsweise eine Steuerhülse (19) am Innenumfang ein Auslöseglied (25) einer Auslöse-Steuerung (20) sowie am Außenumfang mindestens ein Stellglied (29, 30) einer Nachstell-Steuerung (21) bildet.

9. Arbeitsgerät nach einem der vorhergehenden Ansprüche, dadurch gekennzeichnet, daß mindestens ein Werkzeug (11) über gesonderte Auslösungen (37, 40) im wesentlichen gleichwirkend nachstellbar ist, daß insbesondere mindestens zwei Auslösungen auf eine gemeinsame Nachstell-Steuerung (21) wirken und daß vorzugsweise gesonderte Auslösungen gesonderte Betätigungen aufweisen und/oder eine Auslösung durch unmittelbares Betätigen eines Steuergliedes (19) einer Nachstell-Steuerung (21) erfolgt.

10. Arbeitsgerät nach einem der vorhergehenden Ansprüche, dadurch gekennzeichnet, daß mindestens eine Auslösung (40) über wenigstens ein in Betriebslage des Trenngerätes (1) von außen zugängliches Betätigungsglied (42), wie eine Drucktaste, betätigbar ist, daß insbesondere ein Betätigungsglied (42) an einer Rückseite des Trenngerätes (1) und/oder unter einem Führungsholm (3) für das Trenngerät (1) angeordnet ist und daß vorzugsweise ein Betätigungsglied (42) als Pedaltaste ausgebildet und/oder geneigt an einem Schenkel einer einspringenden Winkelfläche angeordnet ist.

11. Arbeitsgerät nach einem der vorhergehenden Ansprüche, dadurch gekennzeichnet, daß mindestens eine Auslösung (40) wenigstens einen willkürlich betätigbaren Schalter (44), wie einen Springschalter, aufweist, daß insbesondere ein Schalter (44) als elektrischer Unterbrechungs- und/oder Kurzschlußschalter ausgebildet ist und daß vorzugsweise ein Schalter (44) in Betriebs-Schaltstellung zu einer Auslöse-Schaltstellung für die Nachstellung federbelastet sowie durch Freigabe seines Betätigungsgliedes (45) selbst umschaltend in die Auslöse-Schaltstellung überführbar ist.

12. Arbeitsgerät nach einem der vorhergehenden Ansprüche, dadurch gekennzeichnet, daß eine Not-Verzögerung für die Arbeitsbewegung mindestens eines Werkzeuges (11) vorgesehen ist, daß insbesondere zur Not-Verzögerung eine Bremse vorgesehen ist und daß vorzugsweise zur Not-Verzögerung und zum Abschalten des Trenngerätes (1) gesonderte Betätigungsglieder (42, 52) vorgesehen sind und/oder daß die Not-Verzögerung auf die Auslösung einer Nachstellung justiert ist, während die Normal-Abschaltung des Trenngerätes (1) hinsichtlich der Auslösung einer Nachstellung im wesentlichen wirkungslos ist.

## Claims

1. An implement, particularly a filament-type trimmer for agricultural purposes or the like, comprising at least one connection of drive transmission members (15, 16, 19, 18) each movable along at least one transmission force flow in a working movement belonging to said force flow and of which at least one is configured as a tool carrier (18) and in which at least one tool (11) is to be arranged adjustable for activating an actuating pulse, characterized in that as said actuating pulse for activating readjustment of at least one tool (11) a modulation of the working movement of at least one drive transmission member (15, 16) is provided.

2. The implement as set forth in the preamble of claim 1, characterized in that a transmission of an actuating pulse for activating readjustment of at least one tool (11) or the like occurs approximately along at least one part of the transmission force flow acting substantially in the same direction thereof, that in particular the activating pulse is introduced upstream of at least one readjustment control (21) determining the readjustment travel and that preferably said activating pulse materializes from a negative and/or positive acceleration of a corresponding working movement.

3. The implement as set forth in claim 1 or 2, characterized in that an activation of a readjustment or the like occurs via at least one brake, that in particular one brake engages directly at least one transmission means (15) and that preferably one brake is configured with a non-contact plugging resistor or is formed by a pluggable drive motor (14) and/or that an activation affects at least one mechanical readjustment control (21), that in particular one readjustment control comprises an incremental switching mechanism (21) and that preferably one readjustment control comprises a mechanically movable control member (19) to be actuated via said activator (40) or for control transversely to the corresponding working movement.

4. The implement as set forth in any of the preceding claims, characterized in that the activation is transmitted substantially mechanically, that in particular at least one mechanical activating drive (20) is provided and that preferably a control member (19) of a readjustment control (21) is actuated at the same time as an activating output member of an activating drive (20) and/or via a ramp control (25, 26).

5. The implement as set forth in any of the preceding claims, characterized in that the working movement of at least one transmission member is substantially a rotary movement and/or the readjustment movement of at least one tool (11) is at least partly a linear movement, that in particular the activation of readjustment of at least one tool (11) includes a control movement approximately parallel to the axis (10) of the associated working movement and that preferably an activating drive (20) between an axial movement and a rotary movement comprises interactingly translating positioning members (25, 26).

6. The implement as set forth in any of the preceding claims, characterized in that at least one of the transmission members (19, 18) for activation is configured as a mass inertia body restrictedly adjustable with respect to at least one further transmission member (15, 16) substantially in the sense of its working movement under the forces of mass inertia, that in particular one inertial body includes at least one of the single bodies formed by at least one tool carrier (18), at least one tool (11), at least one implement head (17) as well as at least one control member (19) of a readjustment control (21) or an activating drive (20) and that preferably an implement head (9) carrying at least one tool (11) is rotatable to the limit of a stop with respect to an output shaft (15) in a control movement.

7. The implement as set forth in any of the preceding claims, characterized in that at least one tool (11) is formed by one end of a flexible cord readjustably wound on at least one storage (39), that in particular one storage (39) is rotatable within and with respect to a housing (17) incrementally by unwinding readjustment increments and that preferably in the drive connection between a tool carrier (18) und an output shaft (15) an activating drive (20) and/or a readjustment control (21) is arranged.

8. The implement as set forth in any of the preceding claims, characterized in that at least one activating drive (20) of said activator (40) is arranged substantially completely encapsulated and/or substantially in the same axis as an axis (10) of said drive connection, that in particular one activating drive (20) comprises at least one control sleeve (19) surrounding a shaft (15) axially shiftable and/or substantially in a non-rotatable connection and that in particular one control sleeve (19) at the inner circumference forms an activating member (25) of an activation control (20) as well as at the outer circumference at least one positioner (29, 30) of a readjustment control (21).

9. The implement as set forth in any of the preceding claims, characterized in that at least one tool (11) is readjustable substantially equally acting via separate activators (37, 40), that in particular at least two activators act on a common readjustment control (21) and that preferably separate activators feature separate actuations and/or one activation results from direct actuation of a control movement (19) of a readjustment control (21).

10. The implement as set forth in any of the preceding claims, characterized in that at least one activator (40) is actuatable via at least one actuating member (42), such as a pushbutton, accessible from without in the operating position of the parting implement (1), that in particular one actuating member (42) is arranged on a rear side of the parting implement (1) and/or under a guide pole (3) for said parting implement (1) and that preferably one actuating member (42) is configured as a pedal button and/or arranged inclined on a leg of a inwardly protruding angular surface.

11. The implement as set forth in any of the preceding claims, characterized in that at least one activator (40) comprises at least one switch (44) actuatable at will, such as a snap switch, that in particular one switch (44) is configured as an electrical open-circuit and/or short-circuit switch and that preferably one switch (44) in the operating switch position is spring-loaded to an activation switch position for the readjustment and is translatable into said activation switch position by automatic changeover due to release of its actuating member (45).

12. The implement as set forth in any of the preceding claims, characterized in that an emergency delay is provided for the working movement of at least one tool (11), that in particular for emergency delay a brake is provided and that preferably for emergency delay and for switching off the parting implement (1) separate actuating members (42, 52) are provided and/or that said emergency delay is set to activate a readjustment whilst the normal means of switching off said parting implement (1) is substantially without effect as regards activating a readjustment.

## Revendications

1. Appareil, notamment coupe-herbe à fil destiné à des fins agricoles ou analogues, comprenant au moins une combinaison d'organes d'entraînement et de transmission (15, 16, 19, 18) qui sont mobiles le long d'au moins un flux de forces de transmission par un mouvement de travail associé au flux de forces, et dont au moins un est réalisé en tant que porte-outil (18), sachant qu'au moins un outil (11) peut être monté de façon réglable sur cet organe en déclenchant une impulsion de déclenchement, caractérisé en ce qu'est prévue en tant qu'impulsion de déclenchement pour déclencher le réglage d'au moins un outil (11) une modulation du mouvement de travail d'au moins un organe d'entraînement et de transmission (15, 16).

2. Appareil selon le préambule de la revendication 1, caractérisé en ce qu'une transmission d'une impulsion de déclenchement pour déclencher un réglage d'au moins un outil (11) ou analogues s'effectue approximativement le long d'au moins une partie du flux de forces de transmission, pour l'essentiel dans la même direction que ce dernier, en ce que notamment l'impulsion de déclenchement intervient en amont d'au moins un dispositif de commande du réglage (21) déterminant la longueur de réglage, et en ce que, de préférence, l'impulsion de déclenchement est déclenchée par une accélération négative et/ou positive d'un mouvement de travail qui y est associé.

3. Appareil selon la revendication 1 ou 2, caractérisé en ce qu'un réglage ou analogues est déclenché par le biais d'au moins un frein, en ce que notamment un frein agit directement sur au moins un organe de transmission (15), et en ce que, de préférence, un frein est réalisé avec une résistance de freinage sans contact ou est formé par un moteur d'entraînement (14) pouvant être commuté en mode de freinage et/ou en ce qu'un déclencheur agit sur au moins un dispositif mécanique de commande du réglage (21), en ce que notamment un dispositif de commande du réglage présente un mécanisme d'avancement graduel (21), et en ce que, de préférence, un dispositif de commande du réglage présente un organe de manoeuvre (19) mécanique actionné par le biais du déclencheur (40) ou pouvant être déplacé par rapport au dispositif de réglage, transversalement par rapport au mouvement de travail qui y est associé.

4. Appareil selon l'une des revendications précédentes, caractérisé en ce que le déclenchement est transmis essentiellement par voie mécanique, en ce qu'est notamment prévu au moins un dispositif de déclenchement mécanique (20), et en ce que, de préférence, un organe de manoeuvre (19) d'un dispositif de commande du réglage (21) est actionné en même temps qu'un organe de déclenchement de sortie d'un dispositif de déclenchement (20) et/ou par le biais d'un dispositif de commande à pas hélicoïdal (25, 26).

5. Appareil selon l'une des revendications précédentes, caractérisé en ce que le mouvement de travail d'au moins un organe de transmission est, pour l'essentiel, un mouvement rotatif et/ou en ce que le mouvement de réglage d'au moins un outil (11) est, au moins en partie, un mouvement linéaire, en ce que notamment le déclenchement du réglage d'au moins un outil (11) comprend un mouvement de commande approximativement parallèle à l'axe (10) du mouvement de travail qui y est associé, et en ce que, de préférence, un dispositif de déclenchement (20) transformant un mouvement axial en un mouvement rotatif présente des organes de réglage (25, 26) en prise l'un avec l'autre.

6. Appareil selon l'une des revendications précédentes, caractérisé en ce qu'au moins l'un des organes de transmission (19, 18) est réalisé, pour procéder au déclenchement, en tant que corps inertiel massif pouvant être déplacé de façon limitée par rapport à au moins un autre organe de transmission (15, 16), pour l'essentiel dans le sens de son mouvement de travail, sous l'effet de forces d'inertie massives, en ce que notamment un corps inertiel comprend au moins un des corps individuels composés d'au moins un porte-outil (18), d'au moins un outil (11), d'au moins un carter d'outil (17), ainsi que d'au moins un organe de manoeuvre (19) d'un dispositif de commande du réglage (21) ou d'un dispositif de déclenchement (20), et en ce que, de préférence, une tête porte-outil (9) portant au moins un outil (11) peut effectuer un mouvement de commande rotatif par rapport à un arbre menant (15), lequel mouvement est limité par une butée.

7. Appareil selon l'une des revendications précédentes, caractérisé en ce qu'au moins un outil (11) est formé par une extrémité d'un fil flexible enroulé de façon réglable dans au moins un magasin (39), en ce que notamment un magasin (39) peut tourner à l'intérieur d'un carter (17) et par rapport à ce dernier pour rallonger graduellement le fil, et en ce que, de préférence, un dispositif de déclenchement (20) et/ou un dispositif de commande du réglage (21) est disposé dans la liaison menante entre un porte-outil (18) et un arbre menant (15).

8. Appareil selon l'une des revendications précédentes, caractérisé en ce qu'au moins un dispositif de déclenchement (20) du déclencheur (40) est essentiellement totalement isolé et/ou est disposé essentiellement sur le même axe qu'un axe (10) de la liaison menante, en ce que notamment un dispositif de déclenchement (20) présente au moins une douille de commande (19) entourant un arbre (15) de manière à être mobile dans la direction de l'axe et/ou de manière à être fixe en rotation, et en ce que, de préférence, une douille de commande (19) forme sur le pourtour intérieur un organe de déclenchement (25) d'un dispositif de commande du déclenchement (20) et sur le pourtour extérieur au moins un organe de réglage (29, 30) d'un dispositif de commande du réglage (21).

9. Appareil selon l'une des revendications précédentes, caractérisé en ce qu'au moins un outil (11) est réglable essentiellement de façon identique par le biais de déclencheurs distincts (37, 40), en ce que notamment au moins deux déclencheurs agissent sur un même dispositif de commande du réglage (21), et en ce que, de préférence, des déclencheurs séparés présentent des dispositifs d'actionnement séparés et/ou en ce qu'un déclenchement intervient en actionnant directement un organe de manoeuvre (19) d'un dispositif de commande du réglage (21).

10. Appareil selon l'une des revendications précédentes, caractérisé en ce qu'au moins un déclencheur (40) peut être actionné par le biais d'au moins un organe d'actionnement (42), tel qu'un poussoir, qui est accessible de l'extérieur lorsque le dispositif de coupe (1) est en position de fonctionnement, en ce que notamment un organe d'actionnement (42) est situé sur une face arrière du dispositif de coupe (1) et/ou sous un manche de guidage (3) pour le dispositif de coupe (1), et en ce que, de préférence, un organe d'actionnement (42) est réalisé en tant que pédale et/ou est disposé en biais sur un côté d'une surface angulaire rentrante.

11. Appareil selon l'une des revendications précédentes, caractérisé en ce qu'au moins un déclencheur (40) présente au moins un interrupteur (44) pouvant être actionné arbitrairement, tel qu'un interrupteur à bascule, en ce que notamment un interrupteur (44) est réalisé en tant que coupe-circuit électrique et/ou disjoncteur, et en ce que, de préférence, un interrupteur (44) en position de marche est sollicité par un ressort qui le met dans une position de déclenchement pour procéder au réglage et but être mis automatiquement dans la position de déclenchement en libérant son organe d'actionnement (45).

12. Appareil selon l'une des revendications précédentes, caractérisé en ce qu'est prévu un retard de sécurité pour le mouvement de travail d'au moins un outil (11), en ce que, notamment pour mettre en oeuvre le retard de sécurité, un frein est prévu, et en ce que, de préférence pour mettre en oeuvre le retard de sécurité et pour couper le dispositif de coupe (1), des organes d'actionnement séparés (42, 52) sont prévus, et/ou en ce que le retard de sécurité est coordonné avec le déclenchement d'un réglage, tandis que la coupure normale du dispositif de coupe (1) est essentiellement inefficace pour déclencher un réglage.
